Europäisches Patentamt

European Patent Office

Office européen des brevets

(11) Publication number: **0 161 741**
**B1**

(12) **EUROPEAN PATENT SPECIFICATION**

(45) Date of publication of patent specification: **31.10.90**

(51) Int. Cl.⁵: **B 01 D 53/08**

(21) Application number: **85301034.6**

(22) Date of filing: **15.02.85**

(54) **Apparatus and method for the removal of dust from an adsorption tower of the dry moving bed type.**

(30) Priority: **16.02.84 JP 26154/84**

(43) Date of publication of application:
**21.11.85 Bulletin 85/47**

(45) Publication of the grant of the patent:
**31.10.90 Bulletin 90/44**

(84) Designated Contracting States:
**DE FR GB**

(56) References cited:
**DE-C- 352 081**
**US-A-4 306 886**

(73) Proprietor: **MITSUI MINING COMPANY, LIMITED**
**1-1, Nihonbashi-Muromachi 2-chome**
**Chuo-ku Tokyo 103 (JP)**
(73) Proprietor: **MITSUI MIIKE ENGINEERING CORP**
**1-1, Nihonbashi-Muromachi 2-chome**
**Chuo-ku Tokyo (JP)**

(72) Inventor: **Furuyama, Kuninori c/o Tochigi Factory**
**Mitsui Miike Engineering Corp. 1,Koumachi**
**Tochigi-shi Tochigi-ken (JP)**
Inventor: **Ito, Yoshiro c/o Mitsui Mining Company, Limited**
**1-1, Nihonbashi-Muromachi 2-chome**
**Chuo-ku Tokyo (JP)**

(74) Representative: **Bayliss, Geoffrey Cyril et al**
**BOULT, WADE & TENNANT 27 Furnival Street**
**London EC4A 1PQ (GB)**

EP 0 161 741 B1

Courier Press, Leamington Spa, England.

# EP 0 161 741 B1

## Description

This invention relates to the pre-removal of dust in a dry moving bed type adsorption tower and more particularly, it is concerned with reducing the dust concentration in a gas passing through granular material in an apparatus for contacting a gas with granular material, e.g. a dry moving bed type of adsorption tower used for the removal of $SO_x$ and $NO_x$ from waste gases.

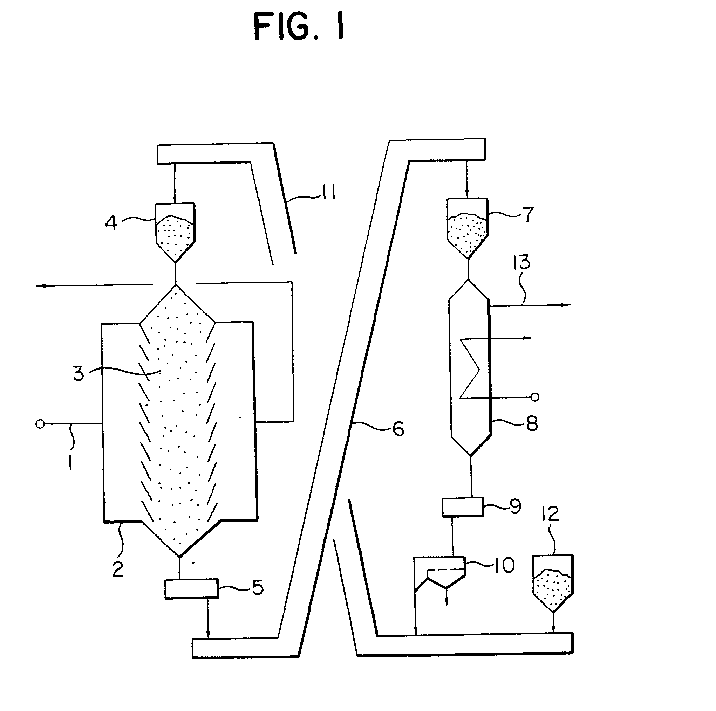

One example of previously known methods for removal of $SO_x$ and $NO_x$ using an ordinary $SO_x$ and $NO_x$ removal apparatus of dry moving bed type will now be illustrated by the flow sheet shown in Figure 1.

Waste gas 1 from boilers or the like is introduced into an adsorption tower 2 and brought into contact with a granular carbonaceous adsorbent 3 packed and held in the tower. The waste gas is thereby subject to reactions for removal of $SO_x$ and $NO_x$. Dust is removed and the waste gas exhausted through a chimney (not shown) into the atmosphere. Carbonaceous adsorbent 3 is continuously withdrawn from the lower part of the adsorption tower 2 by a feeder 5. A constant level of powder is maintained in a hopper 4 over the upper part of adsorption tower 2, so that a moving bed is formed in the adsorption tower 2. $SO_x$ in the waste gas is adsorbed in the form of $H_2SO_4$ during its passage through the adsorption tower 2, while dust and the like are also adsorbed. The adsorbent withdrawn from the feeder 5 is fed to a hopper 7 for a regeneration tower 8 by means of bucket conveyor 6. A constant level of powder is maintained in the hopper 7 and adsorbent is continuously withdrawn from the tower 8 by a feeder 9. In the regeneration tower 8, the adsorbent is heated to decompose $H_2SO_4$ into $SO_2$ and the released $SO_2$ gas is fed (as shown by the arrow 13) to another plant for the treatment of byproducts. The adsorbent withdrawn by the feeder 9 is subjected to a vibrating screen 10 wherein dust in the waste gas and any (abrasive) powder adhering to the adsorbent are separated; then adsorbent is returned to the hopper 4 by means of a bucket conveyor 11. Since the quantity of the adsorbent decreases due to chemical reaction in the regeneration tower 8, the action of the vibrating screen 10 and entrainment with the waste gas, it is necessary to maintain a supply of fresh adsorbent from a hopper 12.

Waste gas from a boiler or the like is ordinarily supplied to an adsorbing tower via a dust collector, but generally has a dust concentration of about 200—400 $mg/m^3$. The dust removal capacity of an adsorption tower is generally so large that in a test, gas flowing at a linear velocity of 0.15 m/sec through a moving bed with a thickness of 1.5 m using an adsorbent with a mean grain size of about 10 mm, for example, at the outlet of the adsorption tower there is little dust having the same composition as that at the inlet thereof. However, the dust concentration itself at the outlet of an adsorption tower is not so small, and mainly consists of a fine powder of carbonaceous adsorbent. Since the dust concentration of a waste gas exhausted in the air is usually severely regulated by law, independently of the dust composition, it is necessary in order to observe this regulation to provide a dust collector even at the outlet of an adsorption tower in many cases.

A fine powder of adsorbent contained in the output of an adsorption tower is produced by abrasion and cracking due to collision of grains at various positions in the cyclic path of the adsorbent. Thus, sieving is carried out by installing a vibrating screen, but it is difficult to remove sufficiently fine powder of which the particle size is a few microns by an ordinary vibrating screen and a large part of the fine powder is not removed. Accordingly, powder passing through a vibrating screen and powder produced from the vibrating screen enter the adsorption tower, where fine powder produced by the movement of adsorbent is further added, although the quantity of this fine powder is very small because the moving speed of the adsorbent is very low in the adsorption tower. Such fine powder can be removed by the rinsing action of a gas and accordingly, the powder rinsed and removed in an adsorption tower results in increase of the dust concentration at the outlet of the adsorption tower.

When the dust concentration in a waste gas is greater than the permitted value at the outlet of an adsorption tower, a dust collector must be installed, the size of which is dependent upon the quantity of waste gas to be processed and, in general, is substantially similar to that of the adsorption tower. Such a dust collector not only occupies a large space, but is expensive to install and maintain.

It is an object of the present invention to provide dust removal for an adsorption tower of the dry moving bed type. It is a more particular object of the present invention to provide pre-removal of dust for an adsorption tower of dry moving bed type by means of a small and inexpensive apparatus.

In one aspect the invention provides a method for the removal of dust from an adsorption tower of dry moving bed type (2) in which a gas is passed transversely through downwardly moving granular adsorbent (3) in the adsorption tower characterised by feeding the adsorbent under packed state to the adsorption tower from a hopper (4) mounted thereabove through a feed duct (14), passing a part of the gas from the adsorption tower through the feed duct (14) countercurrent to the adsorbent at such a rate that the adsorbent is not fluidised but that dust is rinsed from the adsorbent by the gas, and then discharging the rinsing gas and dust through an exhaust port between the hopper (4) and the feed duct (14).

In another aspect the invention provides an apparatus comprising an adsorption tower of dry moving bed type (2) provided with inlet and outlet ports for gas to flow transversely therethrough characterised in that a hopper (4) mounted above the adsorption tower for supplying adsorbent thereto in packed state connects with the tower through a feed duct (14) and in that an exhaust port is provided between said hopper and said feed duct for removal of rinsing gas containing dust which gas will have flowed through the feed duct countercurrent to adsorbent flowing downwardly. Preferably the apparatus comprises means

2

(16) for drawing rinsing gas through the feed duct and exhaust port and a dust-collector (15) through which the rinsing gas containing dust will pass.

The accompanying drawings illustrate the present invention by way of specific examples.

Figure 1 is a schematic flow diagram showing an ordinary $SO_x$ and $NO_x$ removal system of a known form of adsorption tower of dry moving bed type.

Figures 2(a) and 2(b) are schematic diagrams illustrating respectively a comparative method and one example of a method according to the present invention for dust removal.

Figure 3 is a schematic view of a dry moving bed adsorber for practising an experiment relating to the present invention.

Figure 4 is a graph showing the relationship between the gas flow and dust concentration resulting from the experiment.

Figure 5 is a schematic view of an adsorption tower of dry moving bed and two-tower type for practising an experiment relating to the present invention.

Figures 6(a) and 6(b) are schematic views of adsorption towers showing other embodiments of the present invention.

As previously indicated, the method of removing dust is characterized by subjecting the granular adsorbent, before it enters the adsorption tower, to rinsing with a part of the gas from the adsorption tower in a feed pipe of the adsorbent. In particular, it is preferable to use the gas from the adsorption tower in a proportion of 0.1 to 5 vol %, preferably 0.3 to 2 vol %, more preferably 0.5 to 0.8 vol % to the whole volume of the gas to be processed in the tower.

As shown in Figure 1, the hopper 4 and the adsorption tower 2 are ordinarily connected by a pipe with an inner diameter of about 150 to 300 mm and a granular adsorbent is moved downwardly continuously under packed state in this connection pipe. On the other hand, the inside of adsorption tower 2 is generally held at an excess pressure of several tens to several hundred mm of water. If a hole is made at some point on the connection pipe, gas in the adsorption tower may pass through the connection pipe and be discharged into the atmosphere from the hole. At the same time, the adsorbent grains and gas are contacted in the connection pipe to effect rinsing and removing of fine powder. Although such a method is feasible in principle, in practice the discharge of a gas with a high dust concentration into the atmosphere is not permitted by law and it is preferable to operate in a more controlled way.

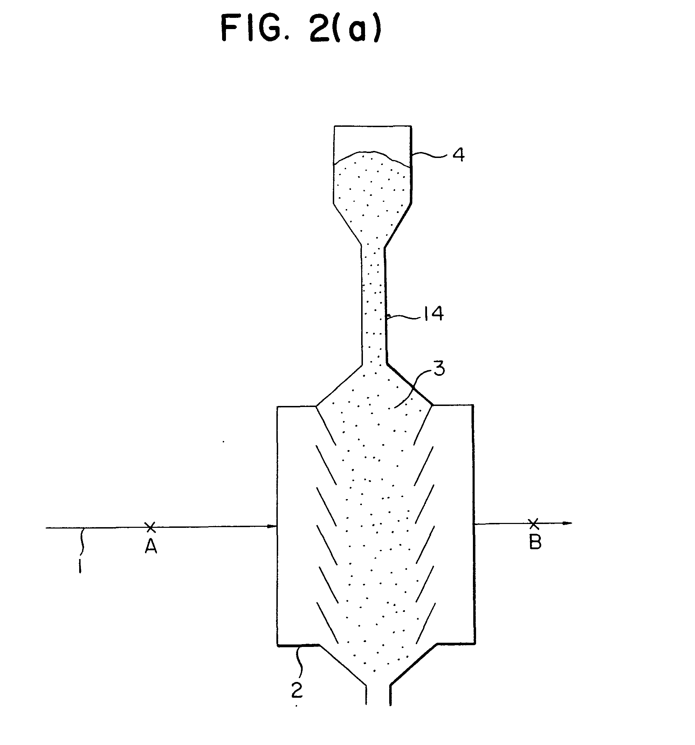

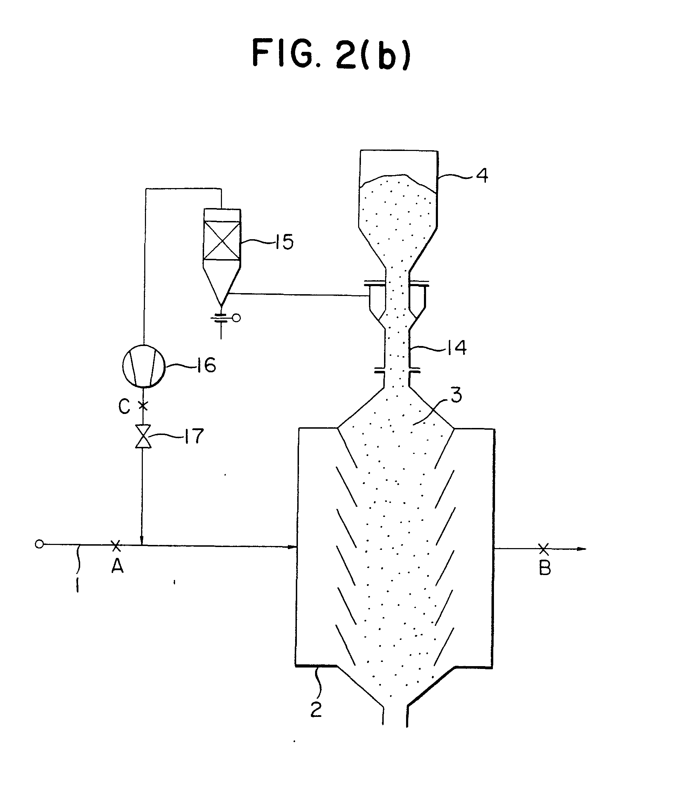

The above described principle can be realized, for example, by use of a system as shown in Figure 2(b). In this system, waste gas is fed via a duct 1 from a boiler to the adsorption tower 2. Granular carbonaceous adsorbent 3 is fed by hopper 4 to the tower via a dust removal pipe 14. The system includes a small-sized dust collector 15, fan 16 and discharge regulator 17. Gas in the adsorption tower 2 is, by means of the fan 16, moved upwards in contact with the adsorbent grains in dust removal pipe 14 and sucked through the collector 15, where the fine powder is removed. Thus rinsed gas is compressed by the fan 16 and returned to the supply duct 1 at the inlet of the tower 2. At this time, the flow rate of the gas rising in dust removal pipe 14 may be controlled such that the adsorbent grains moving downward in the tower be not fluidized.

The merits or effects of the present invention are summarized below:

(1) Dust removal is very effective because it is carried out at the nearest position to an adsorption tower, i.e. at the inlet of an adsorption tower.

(2) Because gas from the adsorption tower is used for rinsing and then returned to the adsorption tower, feeding of another gas to the system and withdrawing of it therefrom can be omitted and contamination of the system with another gas can be avoided.

(3) The dust collector and fan may each be quite small. Where they are used for a tower employing a carbonaceous adsorbent for the dry removal of $SO_x$ and $NO_x$ the gas flow rate would generally be about 100 m³/h for a connection pipe with a diameter of 200 mm.

(4) Since the amount of the gas required for dust removal is a very small proportion of the gas flowing through the tower the increase in gas flow caused by circulation through the collector and fan negligibly affects the main action of the tower.

(5) The size of the dust collector may have a length of about 1 m and may therefore be quite compact.

(6) It is not required to use expensive materials for the above described devices or apparatus, since the gas introduced into the small-sized dust collector and fan is purified; it is substantially free from $SO_x$ and its flow rate is so small that temperature control can readily be effected.

The following examples are given in order to illustrate the present invention in detail without limiting the same.

Example 1

Using apparatus as shown in Figure 2(a) for comparison and Figure 2(b) according to the present invention, a waste gas was subjected to removal of $SO_x$ and dust at a gas flow rate of 1000 m³/hr under the conditions tabulated below:

TABLE 1

|  | Fig. 2(a) | Fig. 2(b) |
|---|---|---|
| Point A dust concentration mg/m³ | 220 | 220 |
| Point A SO$_x$ concentration ppm | 1000 | 1000 |
| Point B dust concentration mg/m³ | 70 | 15 |
| Point B SO$_x$ concentration ppm | 100 | 100 |
| Point C gas flow rate m³/hr | — | 25 |

It is apparent from these results that the dust concentration at Point B is considerably reduced.

Example 2

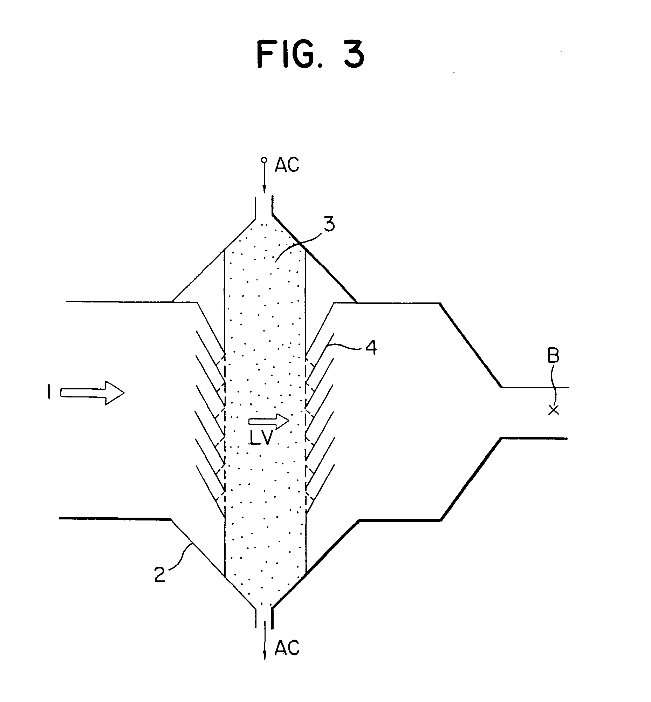

An experiment was carried out using the apparatus as shown in Figure 3. This experiment was carried out so as to ascertain the relationship between the linear velocity LV of a gas in adsorption bed 2 and the quantity of dust entrained therewith (measured at Point B) using a boiler waste gas having a moisture content of 12 vol %, SO$_2$ content of 1000 ppm (DB) and NO$_x$ content of 180 ppm (DB) at 130°C, and activated coke as the adsorbent.

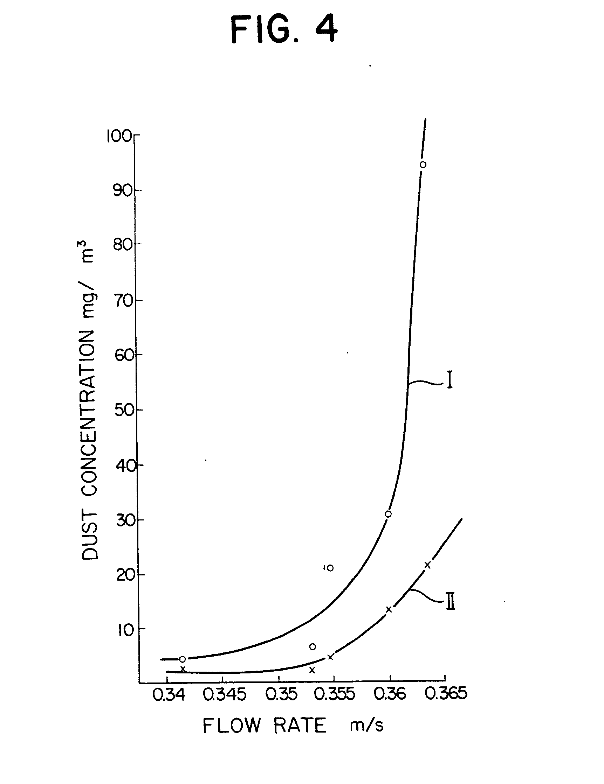

The results are shown in Figure 4, in which Curve I shows the gross concentration of dust collected and Curve II shows the net concentration of insoluble dust, i.e. the concentration obtained after removal of water-soluble components, which consist predominantly of reaction products between SO$_3$ and NH$_3$ in the adsorption bed.

It is apparent from these results that the gross dust concentration rises rapidly above a particular flow rate. This is due to the fact that the dust in the activated coke layer consists mainly of a powder with a particular grain size. The dust concentration thus changes rapidly at the flow rate capable of blowing such a powder off.

Example 3

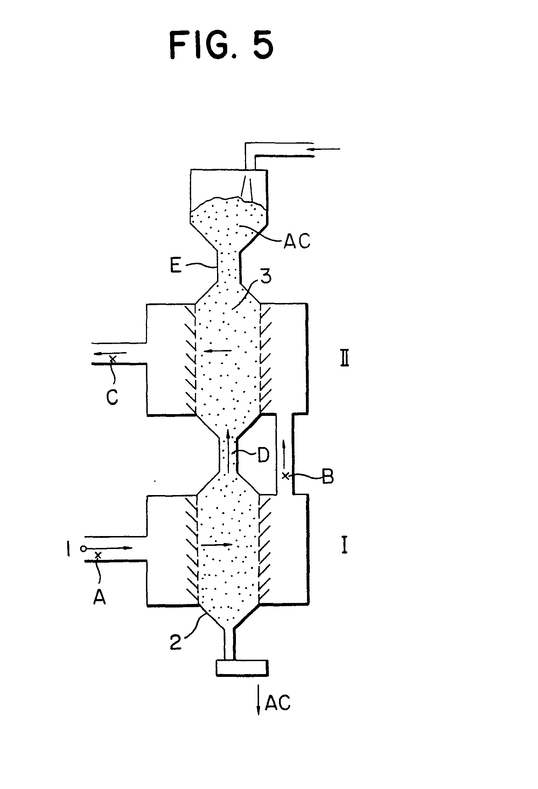

A similar experiment to that of Example 2 was carried out using an apparatus as shown in Figure 5 and the dust concentrations were measured at points A, B and C. All dust concentrations mg/m³ at these points are shown in Table 2 (average values of six measurements):

TABLE 2

|  | A | B | C |
|---|---|---|---|
| Dust concentration mg/m³ | 208 | 14 | 56 |

In these results, it is noted that the dust concentration is lower at Point B. This is due to the fact activated coke moving downwards is rinsed with the leakage gas rising upward at Point D and the dust present in Tower II is prevented from entering into Tower I. The gas linear velocity at Point D was about 0.7 to 0.9 m/sec. Furthermore, it will clearly be understood that the greater part of the dust contained in the gas at Point A is removed by activated coke in Tower I. The relatively higher dust concentration at Point C can be explained by the fact that a fine powder in the activated coke is entrained with the gas in Tower II.

Example 4

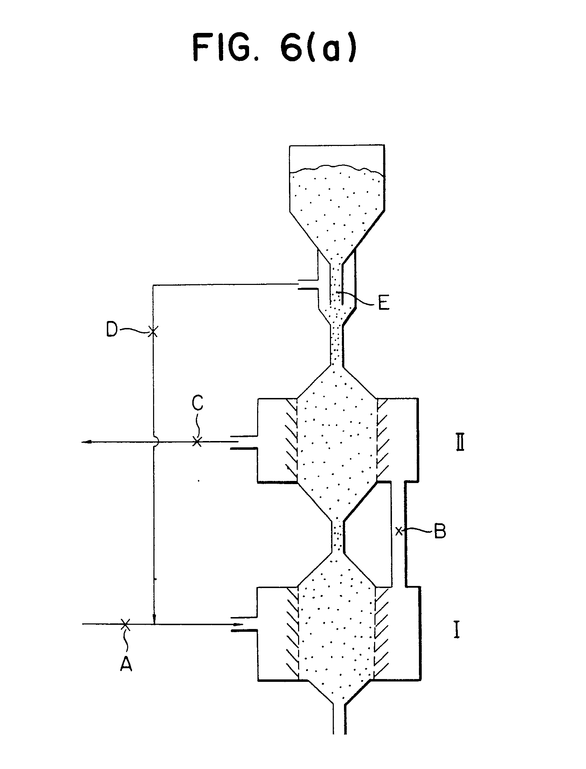

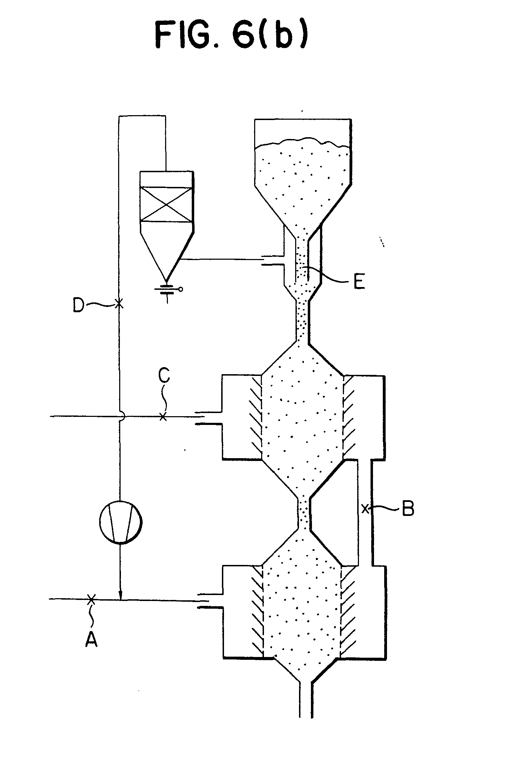

A similar experiment to that of Example 3 was carried out using an apparatus as shown in Figure 6(a) and the dust concentrations were measured at Points A, B, C and D. All dust concentrations mg/m³ at these points are shown in Table 3 (gas flow rate: 1000 m³/H):

TABLE 3

|  | A | B | C | D |
|---|---|---|---|---|
| Dust concentration mg/m³ | 130 | 40 | 27 | 5000 (125)* |
| Flow rate m³/h | 1000 | 1000 | 1000 | 25 |

Note:
* Converted at 1000 m³/h.

4

In these results, it is noted that the dust concentration at Point D has a higher value, i.e. 125 mg/m$^3$ as the converted value at 1000 m$^3$/h. This is due to the fact that activated coke contains a very large quantity of fine powder to be removed at the inlet of Tower II, which will increase the dust concentration at Point C unless removed, and the fine powder is effectively removed according to the present invention.

Example 5

A similar experiment to that of Example 3 was carried out using apparatus as shown in Figure 5 and Figure 6(b) and the dust concentrations were measured at Points A, B, C and D. The reaction conditions and results are shown in Table 4 (gas flow rate: 1000 m$^3$/H):

TABLE 4

|  | Fig. 5 | Fig. 6(b) |
| --- | --- | --- |
| Point A gas flow rate m$^3$/h | 1000 | 1000 |
| Point A SO$_x$ conc. ppm | 1000 | 1000 |
| Point A NO$_x$ conc. ppm | 180 | 180 |
| Point A gas temp. °C | 130 | 130 |
| Point A moisture conc. % | 12 | 12 |
|  |  |  |
| Point C SO$_2$ conc. ppm | 0 | 0 |
| Point C NO$_x$ conc. ppm | 36 | 36 |
|  |  |  |
| SO$_x$ Removal % | 100 | 100 |
| NO$_x$ Removal % | 80 | 80 |
|  |  |  |
| Point A dust conc. mg/m$^3$ | 208 | 210 |
| Point B dust conc. mg/m$^3$ | 14 | 15 |
| Point C dust conc. mg/m$^3$ | 56 | 13 |
| Point D dust conc. mg/m$^3$ | — | — |
| Point D gas flow rate m$^3$/h | — | — |
|  |  |  |
| Dust removal % | 73 | 94 |

As is evident from these data, the dust concentration at Point C in the case of Figure 6(b) of the present invention is remarkably reduced as compared with that at Point C in the case of Figure 5.

**Claims**

1. A method for the removal of dust from an adsorption tower of dry moving bed type (2) in which a gas is passed transversely through downwardly moving granular adsorbent (3) in the adsorption tower characterised by feeding the adsorbent under packed state to the adsorption tower from a hopper (4) mounted thereabove through a feed duct (14), passing a part of the gas from the adsorption tower through the feed duct (14) countercurrent to the adsorbent at such a rate that the adsorbent is not fluidised but that dust is rinsed from the adsorbent by the gas, and then discharging the rinsing gas and dust through an exhaust port between the hopper (4) and the feed duct (14).

2. A method as claimed in claim 1 characterised in that the granular adsorbent is of carbonaceous grains.

3. A method as claimed in claim 2 characterised in that the carbonaceous grains are activated coke grains.

4. A method as claimed in any one of claims 1 to 3 characterised in that the discharged gas is drawn through a dust-collector (15).

5. A method as claimed in claim 4 characterised in that the discharged gas is drawn by a fan (16).

6. A method as claimed in claim 4 or claim 5 characterised in that gas is thereafter discharged by way of a regulator (17) into a supply waste gas which is to be processed by the tower.

7. Apparatus comprising an adsorption tower of dry moving bed type (2) provided with inlet and outlet ports for gas to flow transversely therethrough characterised in that a hopper (4) mounted above the adsorption tower for supplying adsorbent thereto in packed state connects with the tower through a feed duct (14) and in that an exhaust port is provided between said hopper and said feed duct for removal of rinsing gas containing dust which gas will have flowed through the feed duct countercurrent to adsorbent flowing downwardly.

8. Apparatus as claimed in claim 7 characterised in that it comprises means (16) for drawing rinsing gas through the feed duct and exhaust port.

9. Apparatus as claimed in claim 7 characterised in that it comprises means (16) for drawing rinsing gas through the feed duct and exhaust port and a dust-collector (15) through which the rinsing gas containing dust will pass.

10. Apparatus as claimed in any one of claims 7 to 9 characterised in that said inlet port is adapted to receive rinsing gas from which dust has been removed by the dust-collector (15).

**Patentansprüche**

1. Verfahren zum Entfernen von Staub aus einem Adsorptionsturm vom Typ des trockenen Wanderbetts (2), bei welchem ein Gas quer durch ein sich abwärts bewegendes körniges Adsorbens (3) in dem Adsorptionsturm geleitet wird, dadurch gekennzeichnet, daß das Adsorbens in einem zusammengepreßten Zustand aus einem oberhalb des Adsorptionsturms befestigten Behälter (4) durch eine Speiseleitung (14) dem Adsorptionsturm zugeleitet wird, daß ein Teil des Gases aus dem Adsorptionsturm durch die Speiseleitung (14) bezogen auf das Adsorbens im Gegenstrom mit einer solchen Geschwindigkeit geleitet wird, daß das Adsorbens nicht fluidisiert wird, daß jedoch Staub durch das Gas aus dem Adsorbens gespült wird, und daß dann das Spülgas und der Staub durch einen Auslaßanschluß zwischen dem Behälter (4) und der Speiseleitung (14) entladen wird.

2. Verfahren nach Anspruch 1, dadurch gekennzeichnet, daß das körnige Adsorbens aus kohlenstoffhaltigen Körnern besteht.

3. Verfahren nach Anspruch 2, dadurch gekennzeichnet, daß die kohlenstoffhaltigen Körner aktivierte Kokskörner sind.

4. Verfahren nach einem der Ansprüche 1 bis 3, dadurch gekennzeichnet, daß das entladene Gas durch einen Staubsammler (15) gesaugt wird.

5. Verfahren nach Anspruch 4, dadurch gekennzeichnet, daß das entladene Gas durch einen Lüfter (16) gesaugt wird.

6. Verfahren nach Anspruch 4 oder 5, dadurch gekennzeichnet, daß das Gas daran anschließend über einen Regulator (17) in ein Vorrats-Abgas entladen wird, das durch den Turm zu verarbeiten ist.

7. Vorrichtung mit einem Adsorptionsturm vom Typ des trockenen Wanderbetts (2), der mit Einlaß- und Auslaßanschlüssen für Gas, das quer durch diesen strömen soll, ausgestattet ist, dadurch gekennzeichnet, daß ein Behälter (4) vorgesehen ist, der oberhalb des Adsorptionsturms befestigt ist, um ein Adsorbens in zusammengepreßtem Zustand diesem zuzuführen, und mit dem Adsorptionsturm durch eine Speiseleitung (14) verbunden ist, und daß ein Auslaßanschluß zwischen dem Behälter und der Speiseleitung vorgesehen ist, mit welchem Spülgas, das Staub enthält, entfernbar ist, welches Gas durch die Speiseleitung im Gegenstrom zu dem abwärts strömenden Adsorbens geströmt ist.

8. Vorrichtung nach Anspruch 7, dadurch gekennzeichnet, daß eine Vorrichtung (16) für das Saugen des Spülgases durch die Speiseleitung und den Auslaßanschluß vorgesehen ist.

9. Vorrichtung nach Anspruch 7, dadurch gekennzeichnet, daß eine Vorrichtung (16) für das Saugen von Spülgas durch die Speiseleitung und den Ausgangsanschluß und einen Staubsammler (15) vorgesehen ist, durch welche das Staub enthaltende Spülgas strömt.

10. Vorrichtung nach einem der Ansprüche 7 bis 9, dadurch gekennzeichnet, daß der Einlaßanschluß für die Aufnahme von Spülgas ausgestattet ist, aus welchem Staub durch den Staubsammler (15) entfernt ist.

**Revendications**

1. Procédé pour l'élimination de la poussière d'une tour d'adsorption du type lit mobile sec (2) dans lequel un gaz est passé transversalement à travers un adsorbant granulaire (3) s'écoulant vers le bas dans la tour d'adsorption caractérisé par les opérations consistant à distribuer l'adsorbant dans un état compact jusqu'à la tour d'adsorption à partir d'une trémie (4) montée au-dessus de cette dernière par l'intermédiaire d'un canal d'alimentation (14), à faire passer une partie du gaz provenant de la tour d'adsorption par le canal d'alimentation (14) à contre-courant de l'adsorbant à une vitesse telle que l'adsorbant n'est pas fluidifié mais que la poussière est extraite par rinçage de l'adsorbant par le gaz, puis à évacuer le gaz de rinçage et la poussière par un orifice de décharge entre la trémie (4) et le canal d'alimentation (14).

2. Procédé selon la revendication 1 caractérisé en ce que l'adsorbant granulaire est composé de grains carbonés.

3. Procédé selon la revendication 2 caractérisé en ce que les grains carbonés sont des grains de coke activés.

4. Procédé selon l'une quelconque des revendications 1 à 3 caractérisé en ce que le gaz évacué est apsiré à travers un séparateur de poussière (15).

5. Procédé selon la revendication 4 caractérisé en ce que le gaz évacué est aspiré par un ventilateur (16).

6. Procédé selon la revendication 4 ou 5 caractérisé en ce que le gaz est ensuite évacué au moyen d'un régulateur (17) dans un gaz brûlé d'alimentation qui doit être traité par la tour.

7. Appareil comprenant une tour d'adsorption du type lit mobile sec (2) doté d'orifices d'entrée et de sortie pour que le gaz circule transversalement au travers caractérisé en ce qu'une trémie (4) montée au-dessus de la tour d'adsorption pour distribuer l'adsorbant à cette dernière dans un état compact est raccordée à la tour par l'intermédiaire d'un canal d'alimentation (14) et en ce que un orifice de décharge est prévu entre ladite trémie et ledit canal d'alimentation pour extraire le gaz de rinçage renfermant la poussière, lequel gaz aura circulé à travers le canal d'alimentation à contre-courant de l'adsorbant s'écoulant vers le bas.

8. Appareil selon la revendication 7 caractérisé en ce qu'il comprend un moyen (16) pour aspirer le gaz de rinçage par le canal d'alimentation et l'orifice de décharge.

9. Appareil selon la revendication 7 caractérisé en ce qu'il comprend un moyen (16) pour aspirer le gaz de rinçage par le canal d'alimentation et l'orifice de décharge et un séparateur de poussière (15) à travers lequel le gaz de rinçage renfermant la poussière passe.

10. Appareil selon l'une quelconque des revendications 7 à 9 caractérisé en ce que ledit orifice d'entrée est adapté à recevoir le gaz de rinçage duquel la poussière a été extraite par le séparateur de poussière (15).

# FIG. I

# FIG. 2(a)

# FIG. 2(b)

# FIG. 3

# FIG. 4

# FIG. 5

# FIG. 6(a)

# FIG. 6(b)